# EUROPÄISCHE PATENTSCHRIFT

(11) **EP 2 595 939 B1**
(45) Veröffentlichungstag und Bekanntmachung des Hinweises auf die Patenterteilung: **02.05.2018**
(21) Anmeldenummer: 11738189.7
(22) Anmeldetag: 11.07.2011
(51) Int. Cl.: C04B 35/486, C04B 35/626, C04B 35/628, C04B 35/488, C04B 35/645, C04B 35/119, H01B 1/14, H01B 1/18

(54) **ERODIERBARER KERAMIKKÖRPER**
ERODIBLE CERAMIC MATERIAL
MATÉRIAU CÉRAMIQUE ÉRODABLE

(30) Priorität: 19.07.2010 DE 102010036483
(43) Veröffentlichungstag der Anmeldung: 29.05.2013
(73) Patentinhaber: Leroxid, 73269 Hochdorf (DE); Universität Stuttgart, Institut für Fertigungstechnologie Keramischer Bauteile, 70569 Stuttgart (DE)
(72) Erfinder: KERN, Frank, 75233 Tiefenbronn (DE); LANDFRIED, Richard, 70329 Stuttgart (DE); GADOW, Rainer, 83567 Unterreit (DE); LEONHARDT, Wolfgang, 73269 Hochdorf (DE); BURGER, Wolfgang, 73207 Plochingen (DE)
(74) Vertreter: Fleck, Hermann-Josef
(86) Internationale Anmeldenummer: PCT/EP2011/061745
(87) Internationale Veröffentlichungsnummer: WO 2012/010452

(56) Entgegenhaltungen:
- D. OSTROVOY; ET AL: "Mechanical Properties of Toughened Al2O3-ZrO2-TiN Ceramics", JOURNAL OF THE EUROPEAN CERAMIC SOCIETY, Bd. 18, 1. Januar 1998 (1998-01-01), Seiten 381-388, XP002660579, GB
- T. SATO; ET AL: "Sintering and Fracture Behavior of Composites Based on Alumina-Zirconia (Yttria) -Nonoxides", JOURNAL DE PHYSIQUE; COLLOQUE C1, SUPPL. AU N02; TOME 47, 1. Januar 1986 (1986-01-01), Seiten C1-733-C1-737, XP002660580, Japan
- DONG-KYU KIM; ET AL: "Processing and Characterisation of Multiphase Ceramic Composites Part III: Strong, Hard and Tough, High Temperature-Stable Quadruplex and Quintuplex Composites", JOURNAL OF THE AMERICAN CERAMIC SOCIETY, Bd. 91, Nr. 3, 1. Januar 2008 (2008-01-01) , Seiten 799-805, XP002660581, USA
- P. BAI, Y. LI: "Study on High Temperature Sintering Processes of Selective Laser Sintered Al2O3/ZrO2/TiC Ceramics.", SCIENCE OF SINTERING, Bd. 41, 1. Januar 2009 (2009-01-01), Seiten 35-41, XP002660582, China
- ALIDA BELLOSSI; ET AL: "Preparation and Properties of Electroconductive Al2O3-Based Composites", JOURNAL OF THE EUROPEAN CERAMIC SOCIETY, Bd. 10, 1. Januar 1992 (1992-01-01), Seiten 307-315, XP002660583, Italy
- YU.G GOGOTSI; ET AL: "Strengthened Ceramics based on Al2O3", OGNEUPORY, NO 11, PP.10-13; 1989, Nr. 11, 10. November 1989 (1989-11-10), Seiten 667-670, XP9152812, Ukrainian SSR

## Beschreibung

Die Erfindung bezieht sich auf einen erodierbaren oder bereits einer Erodierbeabeitung unterzogenen Keramikkörper mit in einer Aluminiumoxid/Zirkoniumdioxid-Matrix dispergierten elektrisch leitfähigen Hartstoffpartikeln, sowie eine Anwendung desselben.

Ein Keramikkörper dieser Art ist in der EP 0 773 201 B1 angegeben. Die in dieser Druckschrift genannten Zusammensetzungen enthalten stets einen hohen Anteil an Zirkoniumdioxid ZrO₂ und elektrisch leitfähige keramische Teilchen in Form von Hartstoffpartikeln in einer Konzentration von 25 bis 60 Vol.-% in 100 Vol.-% der Gesamtmenge der isolierenden keramischen Teilchen und der elektrisch leitfähigen keramischen Teilchen. Bei der Herstellung werden die Zirkoniumdioxidteilchen teilweise mit 3 Mol-% Y₂O₃ stabilisiert. Die eingesetzten leitfähigen keramische Teilchen haben einen mittleren Durchmesser von nicht grösser als 10 µm. Es ist darauf hingewiesen, dass eine Drahtschneidebearbeitung unter elektrischer Entladung unmöglich ist, wenn der Anteil der leitfähigen keramischen Teilchen weniger als 25 Vol.-% beträgt.

Hochleistungskeramiken besitzen eine hohe Korrosions- und Verschleißbeständigkeit und zeichnen sich im Normalfall durch ihren hohen elektrischen Widerstand aus. Für die Erodiertechnologie benötigt man jedoch elektrisch leitfähige Werkstoffe. Die siliciuminfiltrierte Siliciumcarbidkeramik (SiSiC) und B4C-TiB2 (spröde, hart) sind hier eine Ausnahme. Diese Keramik leitet den elektrischen Strom und eignet sich somit prinzipiell für die Erodiertechnik. Aufgrund seiner niedrigen Härte und Korrosionsanfälligkeit hat SiSiC insbesondere für Verschleißanwendungen keine große Bedeutung. Nach dem Stand der Technik werden heute aber auch Werkstoffe auf Basis von Siliciumnitrid, welches mit einer Beimischung von Titannitrid elektrisch leitfähig gemacht wird, erodiert. In der vorstehend genannten Druckschrift sind erodierbare oxidische Matrixwerkstoffe angegeben.

Die Herstellung von Keramiken, wie sie in der genannten EP 0 773 201 B1 offenbart sind, ist mit nicht geringen Schwierigkeiten verbunden. Aufgrund der hohen Konzentration an Hartstoff gestaltet sich die Verdichtung mitunter sehr schwierig. Ein anderer Aspekt sind die hohen Kosten der feinen Hartstoffpulver. Bei sehr hohen Zirkoniumdioxidkonzentrationen wirken sich diese sehr stark negativ auf die Wärmeleitfähigkeit aus.

Verschiedene Ausführungen von Keramikkörpern mit in einer Aluminiumoxid/Zirkoniumdioxid-Matrix dispergierten elektrisch leitfähigen Hartstoffpartikeln sind in D. Ostrovoy et al: "Mechanical Properties of Toughened AlsO3-ZrO2-TiN Ceramics" JOURNAL OF THE EUROPEAN CERAMIC SOCIETY, Bd. 18, 1. Januar 1998 (1998-01-01), Seiten 381-388, beschrieben. Diese Druckschrift befasst sich mit der Untersuchung mechanischer Eigenschaften solcher Keramikkörper und zeigt in Fig. 3 verschiedene Abbildungen zu deren Struktur.

Weitere Ausführungen zu solchen Keramikkörpern finden sich auch in T. Sato et al: "Sintering and Fracture Behaviour of Composites based on Alumina-Zirconia (Yttria)-Nonoxides", Journal de Physique; Colloque C1, supplément au n2; Tome 47, 1. Febr. 1986, Seiten C1-733-C1-737, XP002660580, Japan, sowie in Dong-Kyu Kim et al: "Processing and Characterisation of Multiphase Ceramic Composites", JOURNAL OF THE AMERICAN CERAMIC Society, Bd. 91, Nr. 3, 1. Jan. 2008 (2008-01-01), Seiten 799-805, XP002660581, USA, und in P. BAI. Y, LI: "Study on High Temperature Sintering Processes of Selective Laser Sintered A1203/ZrO2/TiC Ceramics.", SCIENCE OF SINTERING, Bd. 41, 1. Jan. 2009 (2009-01-01), Seiten 35-41, XP002660582.

In FUKUHARA, M.: Properties of (Y)ZrO₂-AlₓO₃ and (Y)ZrO₂-Al₂O₃-(Ti or Si)C Composites. IN: Journal of the American Ceramic Society., Vol. 72(2), S. 236-242 (1989) ist ein keramisches Material mit einer ZrO₂-Matrix und Al₂O₃ Zusätzen von 20 bis 60 Gew.-% beschrieben. In dieser Druckschrift wird die Wirkung von TiC-Partikeln, und zwar in einer Konzentration von bis zu 40 Gew.-%, auf die Warmfestigkeit untersucht. Um die Festigkeitszunahme zwischen 20 und 30 Gew.-% TiC zu erklären, wurden Leitfähigkeitsuntersuchungen durchgeführt.

Der Erfindung liegt die Aufgabe zugrunde erodierbare, Keramikkörper der eingangs genannten Art bereit zu stellen, die möglichst einfach und wirtschaftlich günstig herstellbar sind und dabei für verschiedene Anwendungsfälle geeignete Werkstoffeigenschaften besitzen.

Diese Aufgabe wird mit den Merkmalen des Anspruches 1 gelöst. Eine vorteilhafte Verwendungsmöglichkeit des Keramikkörpers ist in Anspruch 12 angegeben.

In Untersuchungen der Erfinder hat sich entgegen Angaben im Stand der Technik überraschend gezeigt, dass Keramiken mit in einer Aluminiumoxid/Zirkoniumdioxid-Matrix dispergierten elektrisch leitfähigen Hartstoffpartikeln, welche höchstens 45 Vol.-% Zirkoniumdioxid, das zumindest ab einem Anteil von 10 Vol.-% teilweise oder vollständig stabilisiert ist, und höchstens 25 Vol.-% Hartstoffpartikel enthalten, erodierbar sind, wenn das Zirkoniumdioxid ZrO₂ und die Hartstoffpartikel homogen in der Aluminiumdioxid-Matrix verteilt sind. Dabei sind auch stabile Werkstoffeigenschaften gewährleistet. Wesentlich zu den Werkstoffeigenschaften und zur Bearbeitungsfähigkeit trägt hierbei die Ausbildung der Aluminiumoxid/Zirkoniumdioxid-Matrix bei, wobei der Zirkoniumdioxidgehalt z. B. auch auf einen Anteil von höchstens 40 Vol.-%, 35 Vol.-% oder 30 Vol.-% eingestellt werden kann, um jeweilige Werkstoffeigenschaften zu beeinflussen.

Günstig für die Bearbeitung mittels Erodierens ist dabei, dass der Anteil an Hartstoffpartikeln mindestens 16 Vol.-% beträgt.

Ferner hat sich herausgestellt, dass ein Zirkoniumdioxidgehalt von 25 Vol.-% oder niedriger vorteilhafte Keramiken ergibt.

Besonders vorteilhafte Keramiken erhält man dabei, wenn der Zirkoniumdioxidgehalt etwa 17 Vol.-% beträgt, wobei auch ein geringerer Gehalt an Zirkoniumdioxid von Vorteil sein kann.

Verschiedene Ausgestaltungsvarianten und Anpassungsmöglichkeiten an unterschiedliche Anforderungen ergeben sich dabei dadurch, dass die Hartstoffpartikel mindestens einen Hartstoff aus der Gruppe der leitfähigen Carbide, Boride, Nitride und/oder Carbonitride der Übergangsmetalle und der dritten Hauptgruppe des Periodensystems (PSE) umfassen. D. h. es können Hartstoffpartikel nur einer oder mehrerer dieser Substanzen in Kombination verwendet werden.

Besonders vorteilhafte Ausgestaltungen bestehen dabei darin, dass die Hartstoffpartikel mindestens einen Hartstoff aus der Gruppe TiC, WC, TiN, TiB₂ und Ti(C,N) umfassen, insbesondere aus der Gruppe TiC und WC.

Zur Erodierbarkeit und Verbesserung der Eigenschaften des Keramikkörpers tragen die Maßnahmen bei, dass eine teilweise oder vollständige Stabilisierung des Zirkoniumdioxids mit mindestens einem Oxid aus der Gruppe Yttriumoxid, Scandiumoxid, Nioboxid, Galliumoxid, Germaniumoxid und Titanoxid und Seltenerdoxide vorgenommen ist. Die Teil- oder Vollstabilisierung kann also entweder nur mit einem der Oxide oder mit einer Mischung aus mindestens zweien der stabilisierenden Oxide erfolgen.

Hierbei ergeben sich besonders vorteilhafte Ausgestaltungen dadurch, dass die Stabilisierung mit mindestens einem Oxid aus der Gruppe Yttriumoxid, Neodymoxid, Scandiumoxid und Ytterbiumoxid vorgenommen ist, insbesondere aus der Gruppe Yttriumoxid und Neodymoxid. Es ist vorgesehen, dass zur Stabilisierung ein Anteil an mindestens einem der Oxide von insgesamt 0 - 8 Mol-% gewählt ist. Der Gesamtanteil aller zur Stabilisierung eingesetzten Oxide beträgt dabei also bis zu 8 Mol-%.

Eine besonders vorteilhafte Stabilisierung wird dabei dadurch erreicht, dass zur teilweisen Stabilisierung ein Anteil an mindestens einem der Oxide von 1 - 3 Mol-%, insbesondere von 1,3 - 1,7 Mol-% gewählt ist.

Die Herstellung kann dadurch begünstigt sein, dass bei einem Anteil von Zirkoniumdioxid unter 10 Vol.-% auf eine Stabilisierung verzichtet ist.

Für die Stabilisierung der tetragonalen Zirkoniumdioxidphase eignen sich copräzipitierte Pulver. Die Eigenschaften des Keramikkörpers können vorteilhaft dadurch beeinflusst werden, dass für die Stabilisierung des Zirkoniumdioxids die Pulverpartikel mit dem (den) stabilisierenden Oxid(en) beschichtet werden und während des Sinterprozesses ein Gradientenwerkstoff der tetragonalen Phase ausgebildet wird.

Die Materialeigenschaften des Keramikkörpers, insbesondere das Sinterverhalten, können dadurch begünstigt werden, dass in die Keramik eine metallische Phase eingebracht ist. Diese Maßnahme ist dann besonders geeignet, wenn eine extrem hohe Härte nicht erforderlich ist.

Zum Erreichen vorteilhafter Materialeigenschaften bzw. zu deren Beeinflussung ist ferner die Maßnahme von Vorteil, dass nanoskalige Metallpartikel in die Matrix eingelagert werden. Mit dieser Maßnahme wird eine Härte- und Leitfähigkeitssteigerung erreicht.

Als Herstellverfahren kommen sowohl drucklose Sinterverfahren als auch Drucksinterverfahren in Frage. Beispielhaft können genannt werden: das Heißpressen, elektrisches feldunterstütztes Sintern (z. B. SPS - Spark Plasma Sintering), Mikrowellensintern, sowie das Vorsintern bis hin zur geschlossenen Porosität gefolgt von anschließender heißisostatischer Nachverdichtung.

Bevorzugte Anwendungen sind im Werkzeug- und Formenbau einerseits die direkte Ausbildung der Kavitäten und andererseits der Angussbereiche. Als weitere vorteilhafte Anwendung ist die Herstellung von sehr dünnwandigen und mikrostrukturierten Bauteilen und Maschinenelementen, insbesondere Zahnrädern mit filigraner Geometrie und enger Spezifikation von Toleranzen ermöglicht, welche über Schleifbearbeitung nicht mehr realisiert werden können (kleinste Diamantschleifer haben einen Durchmesser von 0,3 mm).

Erfolgt die Herstellung auf der Basis einer Aluminiumoxid-Matrix, dann weist der Sinterformkörper, gemessen an Keramiken mit ZrO2-Matrix, eine deutlich verbesserte Wärmeleitfähigkeit, höhere Härte bei vergleichbarer Festigkeit und Bruchzähigkeit auf. Festigkeit und Bruchzähigkeit können weiter durch das genannte Coating-Verfahren gesteigert werden. Die Anwendung des Coating-Verfahrens führt auch zu einer deutlich verbesserten hydrothermalen Beständigkeit. Zirkoniumdioxid wandelt nämlich bei erhöhter Temperatur unter Anwesenheit von Feuchtigkeit spontan von der tetragonalen in die monokline Phase um und verliert dabei seine strukturelle Integrität und Festigkeit; bei thermisch hoch belasteten Werkzeugen und Bauteilen (T = 100 bis 150° C), die mit Kühlschmierstoffen beaufschlagt werden, kann gegebenenfalls ein Versagen binnen weniger Stunden auftreten. Durch Einbindung des Zirkoniumdioxids in die Aluminiumoxid-Matrix sowie durch Anwendung des Coating-Verfahrens kann dieser Alterungsprozess stark verlangsamt werden.

Zusätzliche Vorteile werden durch die Einlagerung einer metallischen Phase erreicht. Durch die metallische Phase wird die Leitfähigkeit der Keramik bzw. des Keramikkörpers gesteigert und die Gradierbarkeit weiter verbessert.

Als metallische Komponente kommen in Frage: Übergangsmetalle wie Wolfram, Molybdän, Nickel, Cobalt, Niob und Tantal sowie Gemische und Legierungen daraus, bevorzugt Wolfram, Molybdän und Nickel. Diese Anteile können im Bereich zwischen 0 - 16 Vol.-% liegen.

Bei Anteilen an leitfähiger Keramik von 16 - 20 % sollte der metallische Anteil vorzugsweise bei 5 - 10 % liegen; bei Anteilen an leitfähiger Keramik von 20 - 25 % sollte der Anteil an metallischer Komponente vorzugsweise 0 - 5 % liegen.

Eine Voraussetzung für die metallische Phase ist, dass diese beim Sinterprozess nicht mit den übrigen Bestandteilen eine chemische Reaktion eingehen darf und deren Schmelzpunkt nicht erreicht wird.

Bevorzugte Kombinationen von Hartstoff und metallischer Phase sind z. B. TiN und Wolframmetall, TiC und Wolframmetall, TiC und Nickelmetall; TiN und Nickelmetall; ausgeschlossen ist z. B. die Kombination von Wolframmetall mit Wolframcarbid.

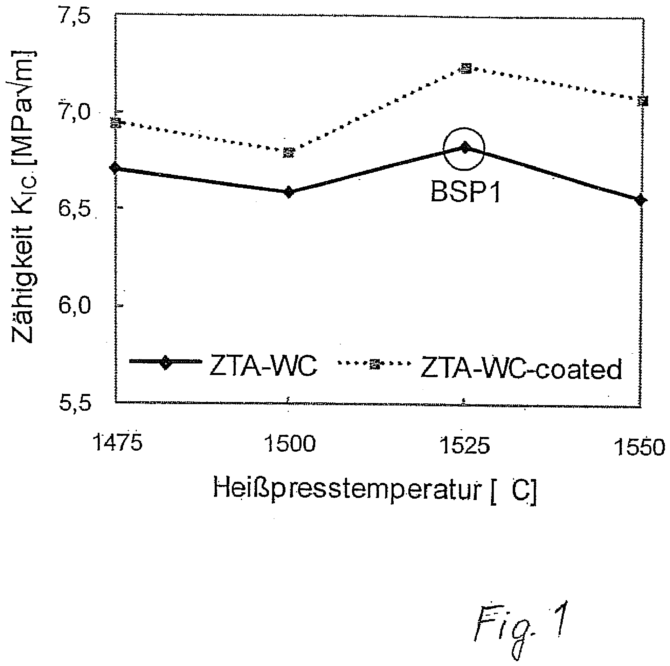

Nachfolgend werden zur Zusammensetzung, zur Herstellung und zu Eigenschaften des Keramikkörpers Ausführungsbeispiele angegeben, wobei zu den Eigenschaften auf Fig. 1 Bezug genommen wird.

### 1. Chemische Zusammensetzung

Bei den betrachteten Ausführungsbeispielen handelt es sich um ZTA-Keramiken (zirconia toughened alumina), die eine dritte, elektrisch leitfähige Phase besitzen. Diese Mischkeramiken bestehen aus den in Tabelle 1 aufgeführten chemischen Zusammensetzungen.

**Tabelle 1**

| BSP1 | | BSP2 | | BSP3 | |
|---|---|---|---|---|---|
| Material | Volumenanteil [Vol.-%] | Material | volumenanteil [Vol.-%] | Material | Volumenanteil [Vol.-%] |
| Al₂O₃ | 59 | Al₂O₃ | 59 | Al₂O₃ | 59 |
| 1.5Y-TZP | 17 | 1.5Y-TZP | 17 | 1.5Y-TZP | 17 |
| WC | 24 | TiC | 24 | TiCN | 24 |

Mit der Bezeichnung 1.5Y-TZP (tetragonal zirconia polycrystals) wird Zirkoniumdioxid (ZrO₂) bezeichnet, das mit 1,5 Mol-% Yttriumoxid (Y₂O₃) in der tetragonalen Phase stabilisiert ist.

### 2. Pulveraufbereitung

Zur Herstellung der Heißpresspulver wurden die in Tabelle 2 aufgeführten Ausgangspulver mit den entsprechenden Partikelgrößen verwendet. Die Verstärkungsphase aus 1.5Y-TZP wird in BSP1 (Beispiel 1), BSP2 (Beispiel 2) und BSP3 (Beispiel 3) durch Mischen von monoklinem ZrO₂ und 3Y-TZP gebildet. Ein weiteres Verfahren zur Herstellung von 1,5Y-TZP ist das direkte

Beschichten von monoklinem ZrO₂ mit Y₂O₃ in dem entsprechenden Mengenverhältnis. Die Auswirkung dieses Beschichtungsverfahrens auf die Zähigkeit der heißgepressten Materialien ist in Abschnitt 4. an ZTA-WC-Mischkeramiken in Abhängigkeit der Heißpresstemperatur dargestellt.

**Tabelle 2**

| Pulvermaterial | WC | TiC | TiCN | ZrO₂ | 3Y-TZP | Al₂O₃ |
|---|---|---|---|---|---|---|
| Partikelgröße d₅₀ [µm] | 0,37 | 2,32 | 3,71 | 0,25 | 0,35 | 0,3 |

Die verschiedenen Pulver werden in Isopropanol mit einem Rührer aus WC-Co und Mahlkugeln aus ZrO₂ (Durchmesser 5 mm) 2 Stunden bei 500 U/min attritiert. Die entstehenden Suspensionen werden bei 60° C getrocknet und anschließend durch ein Sieb mit 100 µm Maschenweite abgesiebt.

### 3. Heißpressen

Die so hergestellten Pulver werden in eine Graphitform gefüllt, die zuvor mit Bornitrid beschichtet wurde. In einer Heißpresse werden die Pulver unter einem mechanischen Vordruck im Vakuum (10 mbar) mit ca. 50 K/min auf eine Temperatur von 1525° C aufgeheizt und eine Stunde bei 600 bar axialem Druck heißgepresst.

### 4. Mechanische und elektrische Eigenschaften

Die hiermit erreichbaren mechanischen Eigenschaften in den Beispielen 1 bis 3 sind in Tabelle 3 aufgelistet.

**Tabelle 3**

| | Vickershärte HV₁₀ | Eindringmodul [GPa] | Zähigkeit [mpa√m] | Festigkeit [MPa] | rel. Dichte %] | spez. Widerstand p [Ωcm] |
|---|---|---|---|---|---|---|
| BSP1 | 1988 | 429 | 6,8 | 1078 | 99,37 | 0,0063 |
| BSP2 | 1960 | 399 | 6,1 | 1050 | 99,14 | 0,020 |
| BSP3 | 1993 | 405 | 6,4 | 955 | 97,33 | 0,038 |

In Fig. 1 ist die Auswirkung der unterschiedlichen Herstellungsverfahren des 1.5Y-TZP in Abhängigkeit von der Sintertemperatur dargestellt. Die Verbesserung der Zähigkeit durch die Beschichtung des ZrO₂-Ausgangspulvers gegenüber dem herkömmlichen Mischen von 0Y- und 3Y-Pulver ist deutlich zu erkennen.

Dabei zeigt die Fig. 1 die Zähigkeit [MPa√m] von ZTA mit 24 Vol.-% WC mit beschichtetem und gemischtem 1.5Y-TZP-Ausgangspulver.

## Patentansprüche

1. Erodierbarer oder bereits einer Erodierbearbeitung unterzogener Keramikkörper mit in einer Aluminiumoxid/Zirkoniumdioxid-Matrix dispergierten elektrisch leitfähigen Hartstoffpartikeln umfassend mindestens einen Hartstoff aus der Gruppe der leitfähigen Carbide, Boride, Nitride und/oder Carbonitride der Übergangsmetalle und der dritten Hauptgruppe des Periodensystems,
wobei das Zirkoniumdioxid und die Hartstoffpartikel homogen in der Aluminiumoxidmatrix verteilt sind und der Anteil an Zirkoniumdioxid bis zu 45 Vol.-% und der Anteil an den Hartstoffpartikeln zwischen 16 Vol.-% und 25 Vol.-% beträgt,
wobei das Zirkoniumdioxid bei einem Anteil von mindestens 10 Vol.-% mit mindestens einem Oxid aus der Gruppe Yttriumoxid, Scandiumoxid, Nioboxid, Galliumoxid, Germaniumoxid und Titanoxid und Seltenerdoxide teilweise oder vollständig stabilisiert ist und zur Stabilisierung ein Anteil an mindestens einem der Oxide von insgesamt bis zu 8 Mol-%, insbesondere zur teilweisen Stabilisierung ein Anteil von 1-3 Mol-%, gewählt ist, und
wobei als Hartstoffpartikel WC mit einer Partikelgröße d₅₀ von 0,37 µm, TiC mit einer Partikelgröße d₅₀ von 2,32 µm oder TiCN mit einer Partikelgröße d₅₀ von 3,71 µm verwendet sind.

2. Keramikkörper nach Anspruch 1,
**dadurch gekennzeichnet,**
**dass** der Anteil an Zirkoniumdioxid höchstens 25 Vol.-% oder höchstens 17 Vol.-% beträgt.

3. Keramikkörper nach einem der vorhergehenden Ansprüche,
**dadurch gekennzeichnet,**
**dass** die Stabilisierung mit mindestens einem Oxid aus der Gruppe Yttriumoxid, Neodymoxid, Scandiumoxid und Ytterbiumoxid vorgenommen ist, insbesondere aus der Gruppe Yttriumoxid und Neodymoxid.

4. Keramikkörper nach einem der vorhergehenden Ansprüche,
**dadurch gekennzeichnet,**
**dass** zur teilweisen Stabilisierung ein Anteil an mindestens einem der Oxide von 1,3 - 1,7 Mol-% gewählt ist.

5. Keramikkörper nach einem der vorhergehenden Ansprüche,
**dadurch gekennzeichnet,**
**dass** bei einem Anteil an Zirkoniumoxid von höchstens 10 Vol.-% auf eine Stabilisierung verzichtet ist.

6. Keramikkörper nach einem der vorhergehenden Ansprüche,
**dadurch gekennzeichnet,**
**dass** zur teilweisen oder vollständigen Stabilisierung die einzelnen Zirkoniumdioxidpartikel mit dem stabilisierenden Oxid nach Anspruch 3 beschichtet sind.

7. Keramikkörper nach einem der vorhergehenden Ansprüche,
**dadurch gekennzeichnet,**
**dass** die teilweise Stabilisierung dadurch hergestellt ist, dass bei der Pulverherstellung der Copräzipitationsprozess angewendet ist.

8. Keramikkörper nach einem der vorhergehenden Ansprüche,
**dadurch gekennzeichnet,**
**dass** in die Keramik eine metallische Phase eingebracht ist.

9. Keramikkörper nach Anspruch 8,
**dadurch gekennzeichnet,**
**dass** als metallische Komponente der metallischen Phase ein Übergangsmetall aus der Gruppe Wolfram, Molybdän, Nickel, Cobalt, Niob oder Tantal oder ein Gemisch oder eine Legierung daraus gewählt ist.

10. Keramikkörper nach Anspruch 9,
**dadurch gekennzeichnet,**
**dass** der Anteil der metallischen Komponente im Bereich zwischen 0 und 16 Vol.-% liegt.

11. Keramikkörper nach einem der vorhergehenden Ansprüche,
**dadurch gekennzeichnet,**
**dass** nanoskalige Metallpartikel in die Matrix eingelagert sind.

12. Verwendung eines Keramikkörpers nach einem der Ansprüche 1 bis 13 im Werkzeug- und Formenbau, wobei in oder an den Werkstücken direkt Kavitäten und/oder Angussbereiche ausgebildet sind.

## Claims

1. An erodible or already erosion-machined ceramic body having electrically conductive hard material particles dispersed in an aluminum oxide/zirconium dioxide matrix, comprising at least one hard material from the group consisting of conductive carbides, borides, nitrides, and/or carbonitrides of the transition metals and the third main group of the periodic system, wherein the zirconium dioxide and the hard material particles are homogenously distributed in the aluminum oxide matrix, and the proportion of zirconium dioxide is up to 45 vol.%, and the proportion of the hard material particles is between 16 vol.% and 25 vol. %,
wherein the zirconium dioxide is partially or completely stabilized at a proportion of at least 10 vol.% with at least one oxide from the group consisting of yttrium oxide, scandium oxide, niobium oxide, gallium oxide, germanium oxide, titanium oxide and rare earth oxides, and a proportion of at least one of the oxides of a total of up to 8 mol.% is selected for stabilization, in particular a proportion of from 1 to 3 mol.% for partial stabilization, and
wherein WC having a particle size d₅₀ of 0.37 µm, TiC having a particle size d₅₀ of 2.32 µm, or TiCN having a particle size d₅₀ of 3.71 µm is used as the hard material particles.

2. The ceramic body according to claim 1,
**characterized in that**
the proportion of zirconium dioxide is at most 25 vol.% or at most 17 vol.%.

3. The ceramic body according to any of the preceding claims,
**characterized in that**
the stabilization is performed with at least one oxide from the group consisting of yttrium oxide, neodymium oxide, scandium oxide, and ytterbium oxide, in particular, from the group consisting of yttrium oxide and neodymium oxide.

4. The ceramic body according to any of the preceding claims,
**characterized in that**
a proportion of at least one of the oxides of from 1.3 to 1.7 mol.% is selected for the partial stabilization.

5. The ceramic body according to any of the preceding claims,
**characterized in that**
stabilization is omitted with a proportion of zirconium oxide of at most 10 vol.%.

6. The ceramic body according to any of the preceding claims,
**characterized in that**
the individual zirconium dioxide particles are coated with the stabilizing oxide according to claim 3 for partial or complete stabilization.

7. The ceramic body according to any of the preceding claims,
**characterized in that**
the partial stabilization is provided by using the co-precipitation process in the production of powder.

8. The ceramic body according to any of the preceding claims,
**characterized in that**
a metal phase is introduced into the ceramic.

9. The ceramic body according to claim 8,
**characterized in that**
a transition metal from the group consisting of tungsten, molybdenum, nickel, cobalt, niobium, or tantalum or a mixture or an alloy thereof is selected as the metal component of the metal phase.

10. The ceramic body according to claim 9,
**characterized in that**
the proportion of the metal component is in the range of from 0 to 16 vol.%.

11. The ceramic body according to any of the preceding claims,
**characterized in that**
nanoscale metal particles are embedded into the matrix.

12. The use of a ceramic body according to any of claims 1 to 13 in tool and mold making, wherein cavities and/or sprue regions are formed directly in or on the workpieces.

## Revendications

1. Corps céramique érodable ou ayant déjà été soumis à un traitement par érosion, avec des particules de matériau dur électriquement conductrices dispersées dans une matrice oxyde d'aluminium / dioxyde de zirconium, comprenant au moins un matériau dur du groupe constitué par les carbures, les borures, les nitrures et/ou les carbonitrures conducteurs des métaux de transition et du troisième groupe principal du tableau périodique,
dans lequel le dioxyde de zirconium et les particules de matériau dur sont répartis de manière homogène dans la matrice d'oxyde d'aluminium et la proportion de dioxyde de zirconium représente jusqu'à 45 % en vol. et la proportion de particules de matériau dur est comprise entre 16 % en vol. et 25 % en vol., dans lequel l'oxyde de zirconium à une proportion d'au moins 10 % en vol. est partiellement ou totalement stabilisé avec au moins un oxyde du groupe constitué par l'oxyde d'yttrium, l'oxyde de scandium, l'oxyde de niobium, l'oxyde de gallium, l'oxyde de germanium, l'oxyde de titane et les oxydes de terres rares et on choisit, pour la stabilisation, une proportion d'au moins l'un des oxydes allant jusqu'à environ 8 % en moles, et en particulier pour la stabilisation partielle, une proportion située dans la plage allant de 1 à 3 % en moles, et
dans lequel on utilise en tant que particules de matériau dur du WC présentant une taille de particules d₅₀ de 0,37 µm, du TiC présentant une taille de particules d₅₀ de 2,32 µm ou du TiCN présentant une taille de particules d₅₀ de 3,71 µm.

2. Corps céramique selon la revendication 1, **caractérisé en ce que**
la proportion de dioxyde de zirconium n'excède pas 25 % en vol. ou 17 % en vol.

3. Corps céramique selon l'une quelconque des revendications précédentes, **caractérisé en ce que**
la stabilisation est réalisée avec au moins un oxyde du groupe constitué par l'oxyde d'yttrium, l'oxyde de néodyme, l'oxyde de scandium et l'oxyde d'ytterbium, en particulier du groupe constitué par l'oxyde d'yttrium et l'oxyde de néodyme.

4. Corps céramique selon l'une quelconque des revendications précédentes, **caractérisé en ce que**
on choisit pour la stabilisation partielle une proportion d'au moins l'un des oxydes située dans la plage allant de 1,3 à 1,7 % en moles.

5. Corps céramique selon l'une quelconque des revendications précédentes, **caractérisé en ce que**
avec une proportion d'oxyde de zirconium n'excédant pas 10 % en vol., on renonce à une stabilisation.

6. Corps céramique selon l'une quelconque des revendications précédentes, **caractérisé en ce que**
pour la stabilisation partielle ou totale, les particules individuelles de dioxyde de zirconium sont enrobées de l'oxyde stabilisant selon la revendication 3.

7. Corps céramique selon l'une quelconque des revendications précédentes, **caractérisé en ce que**
la stabilisation partielle est réalisée en applicant le procédé de coprécipitation lors de la fabrication de la poudre.

8. Corps céramique selon l'une quelconque des revendications précédentes, **caractérisé en ce que**
une phase métallique est incorporée dans la céramique.

9. Corps céramique selon la revendication 8, **caractérisé en ce que**
on choisit en tant que composant métallique de la phase métallique un métal de transition du groupe constitué par le tungstène, le molybdène, le nickel, le cobalt, le niobium ou le tantale, ou un mélange ou un alliage de ceux-ci.

10. Corps céramique selon la revendication 9, **caractérisé en ce que**
la proportion du composant métallique est située dans la plage comprise entre 0 et 16% en vol.

11. Corps céramique selon l'une quelconque des revendications précédentes, **caractérisé en ce que**
des nanoparticules métalliques sont chargées dans la matrice.

12. Utilisation d'un corps céramique selon l'une quelconque des revendications 1 à 13 dans la fabrication des outils et des moules, dans laquelle des cavités et/ou carottes sont formées directement dans ou sur les pièces à usiner.
